(19) Europäisches Patentamt
European Patent Office
Office européen des brevets

(11) **EP 3 679 784 B1**

(12) **EUROPEAN PATENT SPECIFICATION**

(45) Date of publication and mention
of the grant of the patent:
**01.12.2021 Bulletin 2021/48**

(51) Int Cl.:
***A01F 15/07*** *(2006.01)*          ***A01F 15/08*** *(2006.01)*
***B65B 57/04*** *(2006.01)*

(21) Application number: **19151009.8**

(22) Date of filing: **09.01.2019**

(54) **ROUND BALER**

RUNDBALLENPRESSE

ROTO-PRESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2020 Bulletin 2020/29**

(73) Proprietor: **Deere & Company
Moline, IL 61265 (US)**

(72) Inventors:
• **Lebeau, Jonathan
68163 Mannheim (DE)**
• **Cocardon, Michael
68163 Mannheim (DE)**

• **Mercier, Jean-Alexis
68163 Mannheim (DE)**

(74) Representative: **Reichert, Christian
John Deere GmbH & Co. KG
Mannheim Regional Center
Global Intellectual Property Services
John-Deere-Straße 70
68163 Mannheim (DE)**

(56) References cited:
**EP-A1- 2 923 560          EP-A1- 3 192 347
EP-A2- 1 813 146          JP-A- H07 132 019
US-A- 5 615 544          US-A1- 2012 042 792**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to a round baler. Particularly, the present disclosure relates a variable chamber round baler for intimating an operator of a round baler with information on at least one parameter of a bale, such as, the dimension of a bale and each layer of the bale.

### BACKGROUND

A baler includes a baling chamber where the agricultural residues from the farm are collected for binding and forming bales with cylindrical layers of crop material. The baler includes one or more press means which are transversely positioned within the baler. Typically, the bales are bound inside the baling chamber before being discharged on the ground. In variable chamber baler, the press means is formed by one or more endless flexible belt. The width of the bale chamber is covered by the endless flexible belt and the sides of the bale chamber are covered by walls. The endless flexible belt is routed about rolls. In a variable chamber baler, the bale is formed by the endless flexible belt. The variable chamber baler, includes a tensioning arm for maintaining tension in the endless flexible belt during baling.

To form bales of desired density, it is required to optimize the baling process. Currently, to optimize the bale, the operator may be required to adjust the speed of a towing vehicle which tows and powers the baler. However, it might be difficult or not possible for the operator to determine the density of the bales, particularly the change in density of each layer of the crop material . This results in inefficient operation of the baler and causes dissatisfaction to the operator.

Hence, there is a need for a round baler with an arrangement to provide information to the operator of a variable chamber round baler about the change of density of each layer of the bale.

EP 1 813 146 A2 discloses a baler with a bale size sensor connected to a baler controller detects that the size of the bale reaches or exceeds a first predetermined size, and the baler controller sends a halt signal to the tractor controller.

### SUMMARY

The problem addressed by the present invention is that of inability of the operator in determining density of the bales and increasing efficiency of the baler.

The present invention is defined by the claims, wherein in one embodiment a round baler according to claim 1 is specified. Further preferred embodiments are presented in the dependent claims.

## BRIEF DESCRIPTION OF THE DRAWINGS

The drawings show two embodiment examples of the invention, described in more detail below, wherein the brief description of the drawings refers to the accompanying figures in which:

Figure 1 illustrates a variable chamber round baler towed by a tractor;

Figure 2 and Figure 3 illustrates a sectional view of a baling chamber of the variable round baler with a plurality of rolls, flexible endless belt and the tensioning arm with a first embodiment for a sensor mounting;

Figure 4 schematically illustrates a block diagram for determining the thickness of a bale;

Figure 5 illustrates diameter of the bale at the end of the preceding rotation of the bale and a subsequent rotation of the bale; and

Figure 6 schematically illustrates a time duration for detecting the diameters of the bale at the end of each rotation;

Figure 7 illustrates a sectional view of a baling chamber of the variable round baler with a plurality of rolls, flexible endless belt and the tensioning arm and with an alternative embodiment for a sensor mounting.

## DETAILED DESCRIPTION OF THE DRAWINGS

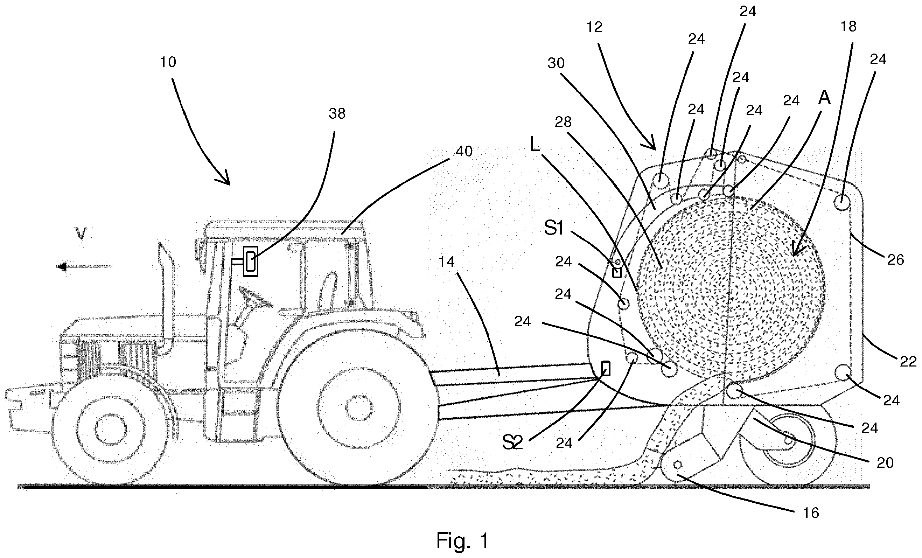

Referring to figure 1, a tractor (10) is used to tow a round baler (12) along the forward towing direction (V). The round baler (12) is a variable chamber baler. The round baler (12) is powered by a drive shaft (14), driven by a Power Transmission Shaft (PTO, not shown) of the tractor (10). Hereinafter, all indicated directions and location of the round baler (12), such as, forward, backward, rear, front, up, above, down, left and right shall be determined with reference to the forward towing direction (V) of the round baler (12) in the field. The round baler (12) includes a pick-up unit (16) provided at the front end of the round baler (12) to collect the residual product, such as hay, straw or other crop, from the ground and to convey it towards a cutting rotor (not shown), from which the crop enters into a baling chamber (18) of the round baler (12). The round baler (12) is mounted on a support frame (20) of a chassis (22) and includes the baling chamber (18) with a plurality of rolls (24) and press means, such as, a flexible endless belt (26), routed around and driven by the rolls (24). The round baler (12) is particularly a variable chamber baler, as illustrated in figures 1-3 and 7.

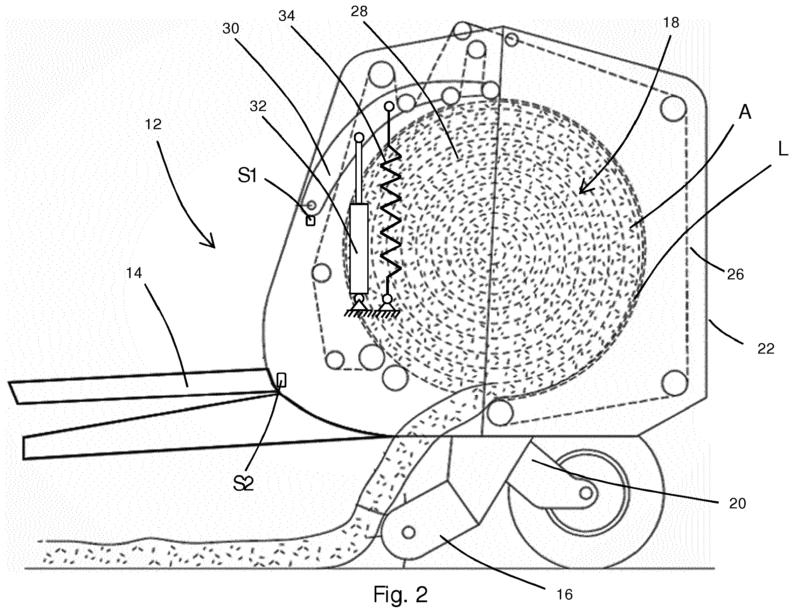

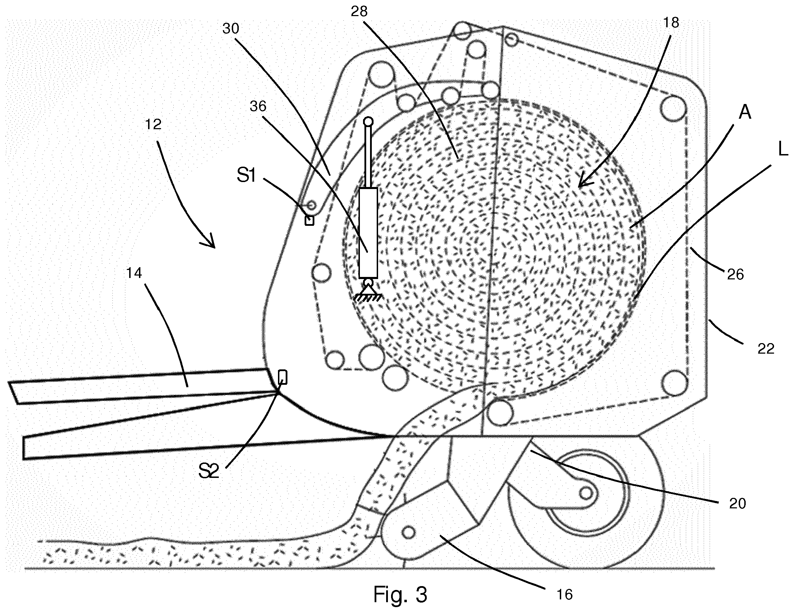

The flexible endless belt (26) is routed around the rolls (24). The flexible endless belt (26) continuously rotates and presses the crop material to form a bale (28). The round baler (12) includes a tensioning arm (30) to ensure appropriate tension is maintained in the flexible endless belt (26). As the size of the bale (28) increases, the tensioning arm (30) moves upwards in response to a growing loop (L) of the belt (26) around the growing bale (28) but maintains an optimum tension in the flexible endless belt (26). The tensioning arm (30) may be moved by a hydraulic cylinder (32) and a spring arrangement (34), as schematically illustrated in figure 2, or solely by a hydraulic cylinder (36), as schematically illustrated in figure 3.

Referring to figures 1 to 3, a display unit (38) is provided in an operator station (40) of the tractor (10). The display unit (38) is configured to continuously indicate change in diameter of the bale (28). The diameter of the bale (28) is detected by at least one first sensor (S1). The sensor (S1) is positioned on or linked to the tensioning arm (30) and responds to a movement of the tensioning arm (30). The first sensor (S1) may be a proximity sensor, an angle sensor, a potentiometer or any other kind of sensor which can be adapted to sense a respective movement of the tensioning arm. As discussed earlier, as the size of the bale (28) increases, the tensioning arm (30) moves upwards. Hence, the sensor (S1) instantaneously indicates the change of the size of the bale (28), in order that the diameter change of the bale (24) is calculated.

The speed of rotation of the plurality of rolls (24) and hence the operational speed of the flexible endless belt (26) is dependent on the speed of rotation (Vp) of the drive shaft (14), or the PTO respectively. The speed of rotation (Vp) of the drive shaft (14) is detected by a second sensor (S2) or derived by other sensing means within the drive train of the tractor (10) indicating the rotation speed of the PTO.

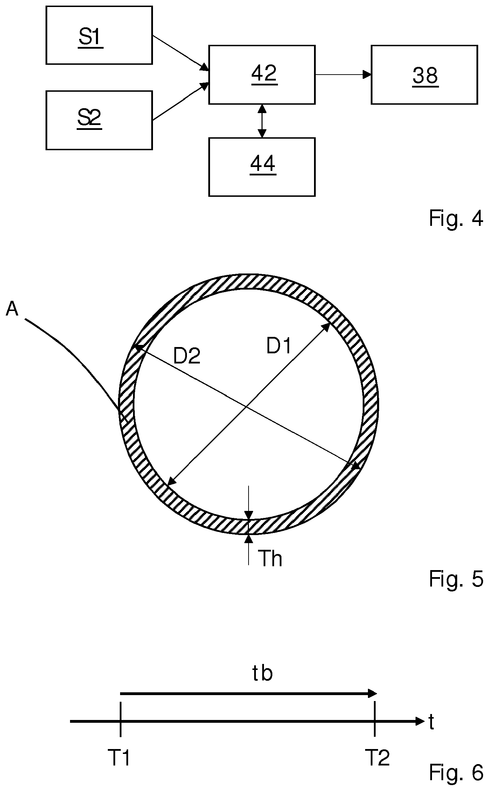

Referring to figure 4, figure 5, figure 6, a controller (42) receives the input from the first sensor (S1) and the second sensor (S2). A processor (44) processes the signals received from the first sensor (S1) and the second sensor (S2) to derive a time interval (tb) for completing one rotation of the bale (28). Thus, for example, as illustrated in Figure 5, a first diameter (D1) of the bale (28) is detected by the sensor (S1) at the end of a preceding rotation, at a first instant of time (T1), as indicated in Figure 6. At the first instant of time (T1), when the diameter (D1) is detected, the processor (44) calculates a time interval (tb) that will be required to complete the subsequent rotation of the bale (28) at a second instant of time (T2). The calculation for the time interval (tb) is provided in equation (i):

$$tb = \Pi D1 / Vp \quad (i)$$

After one rotation of the bale (28), one layer (A) of the crop material is added over the bale (28), thereby changing the first diameter (D1) of the bale (28) to a second diameter (D2) at the end of the preceding rotation. Thus, by adding the time interval (tb), derived from equation (i), to the first instant of time (T1), the processor (44) calculates the second instant of time (T2) when the subsequent rotation will be completed, derived from equation (ii) and (iii):

$$T2 = T1 + tb \quad (ii)$$

$$T2 = T1 + \Pi D1 / Vp \quad (iii)$$

A second diameter (D2) of the bale (28), is detected by the first sensor (S1) at the second instant of time (T2) and considered by the processor (44) for further calculation of a layer thickness (Th) of the layer (A) derived from equation (iv):

$$Th = (D2 - D1) / 2 \quad (iv)$$

As the processor (44) computes the first diameter (D1) and the second diameter (D2) for determining the thickness (Th) of the layer (A) of crop material added to the bale (28) between the first instant of time (T1) and the second instant of time (T2), the thickness (Th) of the layer (A) is indicated or displayed in the display unit (38).

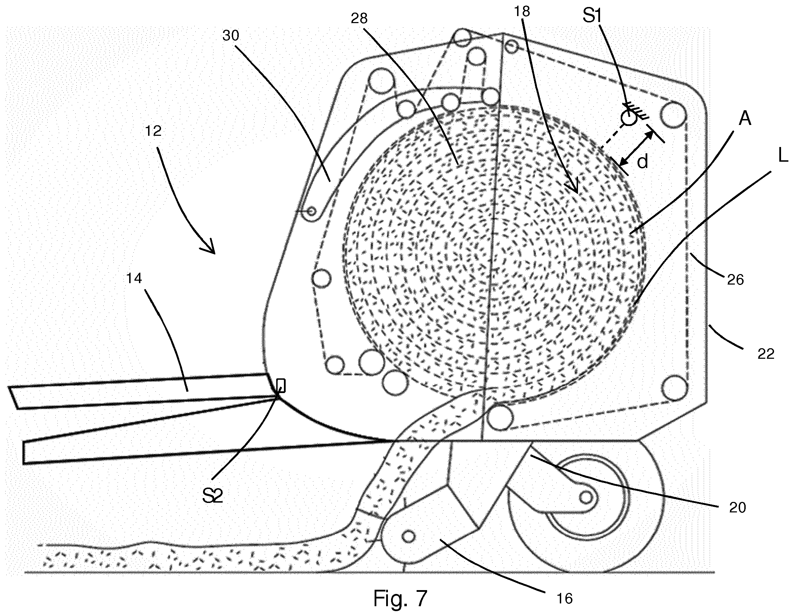

In accordance with an alternate embodiment, shown in figure 7, instead of having the first sensor (S1) positioned on or linked to the tensioning arm (30), the first sensor (S1) may be positioned at a fixed location on the inner side of the chassis (22) to detect a distance (d) from said fixed location to the surface of the endless belt (26) within a portion of the belt (26) where the belt is building the loop (L) which surrounds the bale (28). As the loop (L) grows during a baling process a distance (d) of the surface of the belt (26) within said loop (L) to the fixed location of the sensor (S1) decreases in proportion to the growing diameter of the bale (28). Due to a pre-given routing arrangement of the belt (26) around the rolls (24) and the geometrical dimensions and arrangement of the of the rolls within the baler (12), respectively, the change of the distance (d) from said fixed location to the surface of the endless belt (26) stays in proportional correlation to the change of diameter of the bale (28) and hence indicates the thickness (Th) of the layer (A) accordingly. Therefore, the sensor (S1), with a fixed location on the inner side of the chassis (22), detects the change of said distance (d) after each rotation of the bale (28) from which the thickness (Th) of the layer (A) can be derived and displayed in the display unit (38). In other words, in this embodiment, the distance (d) from said fixed location to the surface of the endless belt (26) at the second instant of time (T2) subtracted from the distance (d) from said fixed location to the surface of the endless belt (26) at the first instant of time (T1) is equal to the thickness (Th) of the layer (A). The first sensor (S1) in this embodiment may be an ultrasonic sensor.

Thus, in accordance with the present invention, the operator of the round baler (12) is updated about the thickness (Th) of each layer (A) of the bale (28). Using the information about the thickness (Th) of each layer (A) of the bale (28), the operator may be able to optimize the density of the bale (28). The information may be also used by the controller (42) to automatically adjust several parameters of the baler (12) to optimize the density of the bale (28). These parameters may include PTO speed, tractor speed, pick-up unit speed and tension of the endless belt (26) adjusted and maintained by the tensioning arm (30).

## Claims

1. A round baler (12) comprising:

   a drive shaft (14);
   a pick-up unit (16) operated by said drive shaft (14), said pick-up unit (16) being configured to supply a crop material;
   a baling chamber (18) configured to receive said crop material from said pick-up unit (16); and
   at least one press means (26) disposed within said baling chamber (18), said press means (26) being configured to press crop material into a cylindrical bale (28) formed by pressed layers (A) of the crop material;
   a first sensor (S1) disposed within said baler (12), said first sensor (S1) being configured to detect a diameter change of said bale (28); the round baler (12) being **characterized in that** it further comprises
   a second sensor (S2) configured to detect a speed of the drive shaft (14)
   a controller (42) configured to receive sensed signals of the speed (Vp) of the drive shaft (14) from said second sensor (S2) and the sensed signals of the diameter change from said first sensor (S1);
   a processor (44) configured to process said speed (Vp) and said diameter change to determine a thickness (Th) of a layer (A) of said crop material; and
   a display unit (38) configured to indicate said thickness (Th) of the layer (A) of said crop material for the bale (28).

2. The round baler (12) as claimed in claim 1, wherein the processor (44) is configured to determine the thickness (Th) of the layer corresponding to the rotation of the bale (28).

3. The round baler (12) as claimed in claim 1 or claim 2, wherein said processer (44) calculates a time interval (tb) required for one rotation of the bale (28).

4. The round baler (12) as claimed in claim 3, wherein said time interval (tb) is determined by a function of the diameter change and said speed (Vp).

5. The round baler (12) as claimed in one of the claims 1 to 4, wherein the first sensor (S1) is at least one of a proximity sensor, an angle sensor and a potentiometer.

6. The round baler (12) as claimed in one of the claims 1 to 5, wherein the first sensor (S1) is linked to a tensioning arm (30) of the press means (26).

7. The round baler (12) as claimed in one of the claims 1 to 5, wherein the first sensor (S1) is mounted at a fixed location on an inner side of a chassis (22) of the round baler (12) to detect a distance (d) from said fixed location to the surface of the endless belt (26) within a portion of the belt (26) where the belt is building a loop (L) which surrounds the bale (28).

8. The round baler (12) as claimed in one of the claims 1 to 7, wherein the second sensor (S2) is a speed sensor further configured to detect a rotation speed of the endless belt (26).

9. The round baler (12) as claimed in one of the claims 1 to 8, wherein the tensioning arm (30) is operated by a combination of a hydraulic cylinder (32) and a spring (34).

10. The round baler (12) as claimed in one of the claims 1 to 8, wherein the tensioning arm (30) is operated by a hydraulic cylinder (32).

## Patentansprüche

1. Rundballenpresse (12), umfassend:

   eine Antriebswelle (14);
   eine Pickup-Einheit (16), die durch die Antriebswelle (14) betätigt wird, wobei die Pickup-Einheit (16) ausgelegt ist, ein Erntegutmaterial zuzuführen;
   eine Ballenpresskammer (18), die ausgelegt ist, das Erntegutmaterial von der Pickup-Einheit (16) zu empfangen; und
   mindestens ein Pressmittel (26), das in der Ballenpresskammer (18) angeordnet ist, wobei das Pressmittel (26) ausgelegt ist, Erntegutmaterial in einen zylindrischen Ballen (28) zu pressen, der durch gepresste Schichten (A) des Erntegutmaterials ausgebildet wird;
   einen ersten Sensor (S1), der in der Ballenpresse (12) angeordnet ist, wobei der erste Sensor (S1) ausgelegt ist, eine Durchmesseränderung des Ballens (28) zu detektieren;

wobei die Rundballenpresse (12) **dadurch gekennzeichnet ist, dass** sie ferner umfasst einen zweiten Sensor (S2), der ausgelegt ist, eine Drehzahl der Antriebswelle (14) zu detektieren; eine Steuerung (42), die ausgelegt ist, erfasste Signale der Drehzahl (Vp) der Antriebswelle (14) von dem zweiten Sensor (S2) und die erfassten Signale der Durchmesseränderung von dem ersten Sensor (S1) zu empfangen; einen Prozessor (44), der ausgelegt ist, die Drehzahl (Vp) und die Durchmesseränderung zu verarbeiten, um eine Dicke (Th) einer Schicht (A) des Erntegutmaterials zu bestimmen; und eine Anzeigeeinheit (38), die ausgelegt ist, die Dicke (Th) der Schicht (A) des Erntegutmaterials für den Ballen (28) anzuzeigen.

2. Rundballenpresse (12) nach Anspruch 1, wobei der Prozessor (44) ausgelegt ist, die Dicke (Th) der Schicht entsprechend zu der Drehung des Ballens (28) zu bestimmen.

3. Rundballenpresse (12) nach Anspruch 1 oder Anspruch 2, wobei der Prozessor (44) ein Zeitintervall (tb) berechnet, das für eine Drehung des Ballens (28) erforderlich ist.

4. Rundballenpresse (12) nach Anspruch 3, wobei das Zeitintervall (tb) durch eine Funktion der Durchmesseränderung und der Drehzahl (Vp) bestimmt wird.

5. Rundballenpresse (12) nach einem der Ansprüche 1 bis 4, wobei der erste Sensor (S1) mindestens einer eines Näherungssensors, eines Winkelsensors und eines Potentiometers ist.

6. Rundballenpresse (12) nach einem der Ansprüche 1 bis 5, wobei der erste Sensor (S1) mit einem Spannarm (30) des Pressmittels (26) verbunden ist.

7. Rundballenpresse (12) nach einem der Ansprüche 1 bis 5, wobei der erste Sensor (S1) an einer festen Position an einer Innenseite eines Chassis (22) der Rundballenpresse (12) montiert ist, um einen Abstand (d) von der festen Position zu der Oberfläche des Endlosbands (26) in einem Abschnitt des Bands (26) zu detektieren, an dem das Band eine Schleife (L) bildet, die den Ballen (28) umgibt.

8. Rundballenpresse (12) nach einem der Ansprüche 1 bis 7, wobei der zweite Sensor (S2) ein Drehzahlsensor ist, der ferner ausgelegt ist, eine Drehzahl des Endlosbands (26) zu detektieren.

9. Rundballenpresse (12) nach einem der Ansprüche 1 bis 8, wobei der Spannarm (30) durch eine Kombination eines Hydraulikzylinders (32) und einer Feder (34) betätigt wird.

10. Rundballenpresse (12) nach einem der Ansprüche 1 bis 8, wobei der Spannarm (30) durch einen Hydraulikzylinder (32) betätigt wird.

## Revendications

1. Roto-presse (12) comportant :

   un arbre (14) d'entraînement ;
   une unité (16) de ramassage actionnée par ledit arbre (14) d'entraînement, ladite unité (16) de ramassage étant configurée pour fournir une matière de récolte ;
   une chambre (18) de pressage configurée pour recevoir ladite matière de récolte provenant de ladite unité (16) de ramassage ; et
   au moins un moyen (26) de presse disposé à l'intérieur de ladite chambre (18) de pressage, ledit moyen (26) de presse étant configuré pour presser la matière de récolte en une balle cylindrique (28) formée de couches pressées (A) de la matière de récolte ;
   un premier capteur (S1) disposé à l'intérieur de ladite presse (12) à balles, ledit premier capteur (S1) étant configuré pour détecter une variation de diamètre de ladite balle (28) ;
   la roto-presse (12) étant **caractérisée en ce qu'**elle comporte en outre
   un second capteur (S2) configuré pour détecter une vitesse de l'arbre (14) d'entraînement ;
   un dispositif (42) de commande configuré pour recevoir des signaux détectés de la vitesse (Vp) de l'arbre (14) d'entraînement en provenance dudit second capteur (S2) et les signaux détectés de la variation de diamètre en provenance dudit premier capteur (S1) ;
   un processeur (44) configuré pour traiter ladite vitesse (Vp) et ladite variation de diamètre afin de déterminer une épaisseur (Th) d'une couche (A) de ladite matière de récolte ; et
   une unité (38) d'affichage configurée pour indiquer ladite épaisseur (Th) de la couche (A) de ladite matière de récolte pour la balle (28).

2. Roto-presse (12) selon la revendication 1, le processeur (44) étant configuré pour déterminer l'épaisseur (Th) de la couche correspondant à la rotation de la balle (28).

3. Roto-presse (12) selon la revendication 1 ou la revendication 2, ledit processeur (44) calculant un intervalle de temps (tb) nécessaire pour une rotation de la balle (28).

4. Roto-presse (12) selon la revendication 3, ledit intervalle de temps (tb) étant déterminé par une fonction de la variation de diamètre et ladite vitesse (Vp) .

5. Roto-presse (12) selon l'une des revendications 1 à 4, le premier capteur (S1) étant au moins un capteur parmi un capteur de proximité, un capteur d'angle et un potentiomètre.

6. Roto-presse (12) selon l'une des revendications 1 à 5, le premier capteur (S1) étant lié à un bras tendeur (30) du moyen (26) de presse.

7. Roto-presse (12) selon l'une des revendications 1 à 5, le premier capteur (S1) étant monté à un emplacement fixe sur un côté intérieur d'un châssis (22) de la roto-presse (12) pour détecter une distance (d) dudit emplacement fixe à la surface de la courroie (26) sans fin à l'intérieur d'une partie de la courroie (26) où la courroie constitue une boucle (L) qui entoure la balle (28).

8. Roto-presse (12) selon l'une des revendications 1 à 7, le second capteur (S2) étant un capteur de vitesse configuré en outre pour détecter une vitesse de rotation de la courroie (26) sans fin.

9. Roto-presse (12) selon l'une des revendications 1 à 8, le bras tendeur (30) étant actionné par une combinaison d'un vérin hydraulique (32) et d'un ressort (34) .

10. Roto-presse (12) selon l'une des revendications 1 à 8, le bras tendeur (30) étant actionné par un vérin hydraulique (32).

Fig. 1

EP 3 679 784 B1

Fig. 2

Fig. 3

S1

S2

42

38

44

Fig. 4

A

D2

D1

Th

Fig. 5

tb

T1

T2

t

Fig. 6

Fig. 7

EP 3 679 784 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1813146 A2